(19) Europäisches Patentamt
European Patent Office
Office européen des brevets

(11) Numéro de publication: **0 118 327**
**B1**

(12) # FASCICULE DE BREVET EUROPEEN

(45) Date de publication du fascicule du brevet:
**22.04.87**

(21) Numéro de dépôt: **84400120.6**

(22) Date de dépôt: **20.01.84**

(51) Int. Cl.⁴: **C 08 F 236/04,** C 08 F 2/28, C 08 F 291/00 // (C08F291/00, 236:04)

(54) **Latex cationiques de copolymères à base de diènes conjugués.**

(30) Priorité: **28.01.83 FR 8301303**

(43) Date de publication de la demande:
**12.09.84 Bulletin 84/37**

(45) Mention de la délivrance du brevet:
**22.04.87 Bulletin 87/17**

(84) Etats contractants désignés:
**AT BE CH DE FR GB IT LI LU NL SE**

(56) Documents cités:
**GB - A - 2 013 221**
**US - A - 3 399 159**
**US - A - 4 337 185**

**CHEMICAL ABSTRACTS, vol. 94, no. 4, janvier 1981, page 17, no. 16338t, Columbus, Ohio, US**

(73) Titulaire: **RHONE-POULENC SPECIALITES CHIMIQUES, "Les Miroirs" 18, Avenue d'Alsace, F-92400 Courbevoie (FR)**

(72) Inventeur: **Leising, Frédéric, 38, rue de Coubron, F-93410 Vaujours (FR)**

(74) Mandataire: **Fabre, Madeleine-France et al, RHONE-POULENC INTERSERVICES Service Brevets Chimie 25, quai Paul Doumer, F-92408 Courbevoie Cédex (FR)**

**EP 0 118 327 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention a pour objet des latex cationiques à base de diènes conjugués obtenus par polymérisation en émulsion.

Il est connu d'après le brevet américain n° 3 399 159 de préparer des latex cationiques en deux étapes, une première étape consistant à polymériser en milieu très acide (pH de l'ordre de 1 à 3,5) un monomère azoté (du type vinylpyridines, terbutylaminoéthyl methacrylate) et un acrylate d'alkyle en l'absence d'émulsifiant et une deuxième étape consistant à polymériser un diène au sein de la dispersion aqueuse obtenue à la première étape.

Les latex ainsi obtenus ne peuvent être utilisés en milieu basique car leur densité de charges cationiques à pH basique est très faible.

Le but de la Demanderesse a été de préparer des latex cationiques utilisables quelque soit le pH.

Les latex cationiques de copolymères à base de diènes conjugués faisant l'objet de l'invention sont caractérisés en ce qu'ils sont obtenus en deux étapes:

– une première étape consistant à préparer une dispersion aqueuse cationique de particules en mettant en présence au moins un composé azoté tertiaire insaturé non-hydrolysable en milieu acide ou alcalin avec le milieu réactionnel (A) d'une opération de polymérisation en émulsion aqueuse d'au moins un monomère non ionogène copolymérisable avec ledit composé azoté tertiaire insaturé non-hydrolysable, ledit milieu réactionnel (A) contenant des charges essentiellement cationiques apportées par au moins une substance génératrice de charges cationiques liables chimiquement aux polymères obtenus à partir des monomères présents et ce jusqu'à un taux de transformation d'au moins 30% des monomères non-ionogènes;

– une deuxième étape consistant à polymériser, au sein de la dispersion aqueuse cationique obtenue à la première étape, au moins un diène conjugué et éventuellement au moins un monomère non-ionogène en présence d'un amorceur non chargé ou générateur de charges cationiques.

On entend par «composé azoté tertiaire insaturé non-hydrolysable en milieu acide ou alcalin», tout composé azoté insaturé exempt de groupe ammonium quaternaire, présentant un atome d'azote trisubstitué par des groupes hydrocarbonés et un taux d'hydrolyse n'excédant pas 5% en milieu acide ou alcalin à la température de polymérisation.

A la première étape, ledit composé azoté tertiaire insaturé non-hydrolysable peut être mis en présence du milieu réactionnel (A) à un stade quelconque de l'opération de polymérisation du ou des monomères non ionogènes copolymérisables avec le composé azoté tertiaire insaturé non-hydrolysable. Ainsi il peut être totalement présent dans le milieu réactionnel (A) dès le départ de la première étape de polymérisation, en particulier lorsque celle-ci n'est pas menée jusqu'à son terme; il peut être également introduit en continu ou en discontinu tout au long de la 1ère étape de polymérisation, en particulier si celle-ci est totale; de même il peut n'être introduit dans le milieu réactionnel (A) qu'après un certain taux de transformation du ou des monomères non-ionogènes (à partir de 30% par exemple) ou bien en fin de 1ère étape de polymérisation (par exemple entre 90 et 98% du taux de transformation).

Selon l'invention les composés azotés tertiaires insaturés non-hydrolysables répondant à la définition donnée ci-dessus, sont représentés par:

1) Les N(ωdialkylaminoalkyl)amides d'acides carboxyliques insaturés de formule:

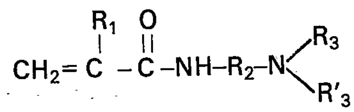

où:

$R_1$ représente un atome d'hydrogène ou un groupe alkyle en $C_1$–$C_4$, et de préférence en $C_1$–$C_2$

$R_2$ représente un groupe alkylène en $C_1$–$C_{12}$, et de préférence $C_1$–$C_8$

$R_3$ et $R'_3$ représentent des groupes alkyles en $C_1$–$C_6$, et de préférence en $C_1$–$C_4$, phényles éventuellement substitués par un radical alkyle en $C_1$–$C_9$

Répondant à cette formule le diméthylaminométhylacrylamide ou méthacrylamide, le diméthylaminoéthylacrylamide ou méthacrylamide . . .

2) Les aminoesters insaturés de formule:

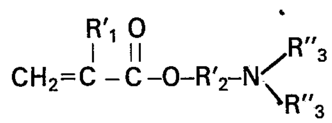

où $R'_1$ représente un grupe alkyle en $C_1$–$C_5$ et de préférence en $C_1$–$C_2$,

$R'_2$ représente un groupe alkylène linéaire ou ramifié contenant au moins 2 atomes de carbone et de préférence en $C_{2-12}$, en particulier $C_2$–$C_8$,

$R''_3$ et $R''_3$ sont identiques ou différents et représentent un groupe alkyle en $C_1$–$C_6$, et de préférence en $C_1$–$C_4$, éventuellement substitué par un radical hydroxy, un groupe phényle éventuellement substitué par un radical alkyle en $C_1$– $C_9$, le nombre total d'atomes de carbone contenus dans les radicaux $R'_2$, $R''_3$ et $R''_3$ devant être supérieur à 8 et de préférence supérieur ou égal à 10.

Répondent à cette formule le diterbutylaminoéthylméthacrylate, le diterbutylaminopropylméthacrylate, le dipentylaminoéthylméthacrylate.

3) Des composés azotés hétérocycliques renfermant un atome d'azote ou de carbone substitué par un groupe vinyle, tels que:

– la 2-vinylpyridine
– la 4-vinylpyridine
– la 1-éthyl 2-vinylpyridine
– la 1-benzyl 4-vinylpyridine
– la 1,2-diméthyl 5-vinylpyridine
– la 1-méthyl 2-vinylquinoléine
– la N-vinyl N'-méthylimidazole
– la 1-vinyl 3-méthylbenzimidazole

Parmi les monomères non ionogènes copolymérisables avec les composés azotés tertiaires insaturés non-hydrolysables, on peut citer:

les composés vinylaromatiques tels que le styrène, l' -méthylstyrène, le vinyltoluène, le monochlorostyrène . . .

les esters vinyliques tels que l'acétate de vinyle, le propionate de vinyle, le versatate de vinyle, le butyrate de vinyle . . .

les nitriles éthyléniques tels que l'acrylonitrile, le méthacrylonitrile . . .

les esters carboxyliques éthyléniques tels que le méthyl-, éthyl-, propyl-, isopropyl, butyl-, 2-éthylhexyl-, hydroxyéthyl-, hydroxypropyl- ou glycidyl-acrylate, le méthyl-, éthyl-, propyl-, butyl-, hydroxyéthyl-, hydroxypropyl- ou glycidyl-méthacrylate, etc. . .

les dialkylesters des diacides carboxyliques éthyléniques, tels que les dialkylesters de l'acide fumarique, maléique, itaconique . . .

les amides éthyléniques et leurs dérivés N-substitués tels que l'acrylamide, le méthacrylamide, le N-méthylol-, N-méthoxyméthyl-acrylamide ou -méthacrylamide . . .

Lesdits monomères non-ionogènes peuvent être utilisés seuls ou bien en mélange entre eux lorsqu'ils sont copolymérisables entre eux.

Les substances génératrices de charges cationiques pouvant êtres mises en œuvre sont des produits non hydrolysables ou partiellement hydrolysables c'est-à-dire des produits dont le taux d'hydrolyse dans les conditions réactionnelles de polymérisation est inférieur ou égal à 50% environ.

Parmi celles-ci on peut citer:

1) Les amorceurs de polymérisation générateurs de radicaux présentant une extrémité cationique tels que le chlorhydrate de 2,2' azobis (2 amidinopropane), le chlorhydrate d'azo bis N, N' diméthylène isobutyramidine.

2) Les sels insaturés copolymérisables d'onium polycoordiné d'un élément des groupes VB et VIB de la classification périodique tel que l'azote, le phosphore, le soufre.

On entend par «sels insaturés d'onium polycoordiné d'un élément des groupes VB et VIB» tout sel présentant un cation onium dans lequel toutes les valences de l'élément des groupes VB et VIB sont satisfaites par des groupements hydrocarbonés, élément dont la valence libre est saturée par un atome de carbone, au moins un desdits groupements hydrocarbonés étant insaturé.

A titre d'exemple on peut citer les sels insaturés d'ammonium quaternaire présentant la formule suivante:

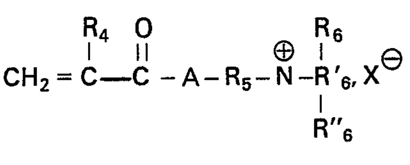

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

$R_4$ représente un atome d'hydrogène ou un groupe méthyle

A représente un atome d'oxygène ou un groupe –NH–

$R_5$ représente un groupe alkylène linéaire ou ramifié contenant de 1 à 18 atomes de carbone, de préférence de 1 à 10 atomes de carbone,

$R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone,

le nombre total d'atomes de carbone présent dans les groupes $R_5$, $R_6$, $R'_6$ et $R''_6$ est supérieur à 4 quand A représente de l'oxygène.

Des produits répondant à cette formule sont le chlorure de triméthylaminoéthylacrylamide, le bromure de triméthylaminopropylacrylamide ou méthacrylamide, le méthylsulfate de triméthylaminobutylacrylamide ou méthacrylamide, le chlorure de triméthylaminopropylméthacrylate.

Parmi les sels d'onium insaturés on peut également citer:

– les sels insaturés de pyridinium, quinolinium imidazolium, benzimidazolium . . . . tels que:
- le bromure de 1-méthyl 2-vinylpyridinium,
- le chlorure de 1-éthyl 2-vinylpyridinium
- le méthylsulfate de 1-éthyl 2-vinylpyridinium
- le chlorure de 1-benzyl 4-vinylpyridinium
- l'iodure de 1-méthyl 2-vinylquinolinium
- le bromure de N-vinyl n'-méthylimidazolium
- le bromure de 1-vinyl 3-méthylbenzimidazolium

– le chlorure de (2-méthacryloxy)diméthylsulfonium

– le méthylsulfate de méthyldiallylsulfonium

– le bromure de triméthylvinylphosphonium

La mise en œuvre de la substance génératrice de charge cationiques dans le milieu réactionnel (A) peut être préalable à celle du composé azoté tertiaire insaturé non-hydrolysable ou concomittante de celle dudit composé azoté insaturé.

Ladite substance génératrice de charges cationiques peut également être présente dans le milieu réactionnel (A) au départ de l'opération de polymérisation par l'intermédiaire d'une «semence cationique» c'est-à-dire d'un polymère ou copolymère préalablement préparé par polymérisation en émulsion aqueuse en milieu cationique du ou des monomères non-ionogènes en présence de la quantité désirée de substance génératrice de charges cationiques.

Pour une bonne réalisation de la première étape du procédé permettant de préparer les latex cationiques de copolymères à base de diènes conjugués faisant l'objet de l'invention, on met en œuvre pour 100 parties en poids de monomère(s) non- ionogènes:

de 1 à 20 parties en poids de substance génératrice de charges cationiques, et de préférence de 2 à 10 parties en poids de ladite substance,

au moins 4 parties en poids au total de substance génératrice de charges cationiques et de composé azoté insaturé et de préférence de 4 à 15 parties en poids.

L'opération de copolymérisation du composé azoté insaturé et du ou des monomères ionogènes constituant la 1ère étape du procédé permettant de préparer les latex cationiques faisant l'objet de l'invention est réalisée dans les conditions classiques de polymérisation en émulsion aqueuse en milieu cationique à une température comprise entre 60 et 90 °C et généralement entre 75 et 85 °C, à un pH quelconque (pouvant varier de 3 à 12 et de préférence de 5 à 9) en présence d'un amorceur cationique ou non-ionique, éventuellement d'un agent émulsifiant cationique ou non-ionique et en outre en présence de la substance génératrice de charges cationiques, ladite substance étant constituée d'un sel insaturé copolymérisable d'onium polycoordiné d'un élément du groupe VB ou VIB et/ou d'un excès d'amorceur cationique.

Les amorceurs cationiques pouvant être mis en œuvre sont ceux déjà cités ci-dessus comme exemple de substance génératrice de charges cationiques.

Comme exemples d'amorceurs non-ioniques on peut citer:

les peroxydes et hydroperoxydes minéraux ou organiques hydrosolubles ou organosolubles générateurs de radicaux libres non chargés tels que le peroxyde d'hydrogène, le peroxyde de benzoyle, l'hydroperoxyde de tert-butyle, l'hydroperoxyde de cumène, le tert-butylperbenzoate, le peroxyde de diisopropylbenzène, le peroxyde de méthyléthylcétone

les systèmes redox obtenus en associant auxdits peroxydes ou hydroperoxydes un réducteur tel que l'acide ascorbique, les sucres, les sels métalliques polyvalents, les sulfites, hydrosulfites, sulfoxalates, thiosulfates, bisulfites de sodium, calcium... le formaldéhyde sulfoxylate de sodium ou de zinc...

les composés azoaliphatiques présentant un groupe azo acyclique et au moins un atome de carbone aliphatique sur chaque atome d'azote, au moins un des atomes de carbone étant tertiaire, tels que l'azobis isobutyronitrile, le 2,2' azobis (2,4-diméthylvaléronitrile), le 2,2' azobis (2,4-diméthyl-4 méthoxyvaléronitrile). Comme exemples d'émulsifiants non-ioniques on peut citer les alcools gras polyéthoxylés, les alkylphénols polyéthoxylés, les acides gras polyéthoxylés...

Comme exemples d'émulsifiants cationiques on peut citer:

– le décylammonium méthylsulfate,
– le bromure de N-éthyldodécylammonium,
– le chlorure de cétylammonium,
– le bromure de cétylammonium,
– le bromure de stéarylammonium,
– le bromure de cétyldiméthylbenzylammonium,
– le chlorure de N,N-diméthyldodécylammonium,
– l'iodure de N-méthyltridécylammonium,
– les chlorures, bromures, sulfates, méthylsulfates ou acétates d'amines grasses éthoxylées.

La quantité d'amorceur mise en œuvre pour réaliser l'opération de polymérisation est fonction du ou des monomères mis en œuvre et de la température de polymérisation; celle-ci est généralement de l'ordre de 0,1 à 5% en poids par rapport au poids total de monomères, et de préférence de l'ordre de 0,1 à 2%.

Il est bien évident que si l'amorceur ou l'émulsifiant est le principal constituant ou un des constituants de la substance génératrice des charges cationiques, un excès par rapport à ces quantités doit être utilisé.

La quantité d'émulsifiant cationique ou non-ionique mise en œuvre pour stabiliser les particules de copolymères peut aller jusqu'à 2% du poids total de monomères.

Parmi les diènes conjugués pouvant être mis en œuvre pour réaliser la deuxième étape du procédé permettant de préparer les latex cationiques faisant l'objet de l'invention, on peut citer le butadiène, l'isoprène, le chloroprène, le 1,3-pentadiène, le diméthylbutadiène, le cyclopentadiène....

Ceux-ci peuvent être mis en œuvre selon des quantités correspondant à environ 20 à 80% en poids, de préférence de 25 à 65% en poids par rapport au poids total de monomères utilisé pour réaliser l'ensemble du procédé (c'est-à-dire diène inclus).

La quantité de monomère(s) non-ionogène(s) éventuellement présente à côté du diène conjugué pour réaliser la 2ème étape peut atteindre 80% en poids environ de la quantité totale de monomère non-ionogène(s) mise en œuvre pour réaliser l'ensemble du procédé.

La deuxième étape de copolymérisation peut être réalisée dans des conditions de température et de pH semblables à celles de la 1ère étape, éventuellement en présence d'un agent limiteur de chaine et d'une quantité supplémentaire d'amorceur non chargé ou générateur de radicaux cationiques si nécessaire. Comme exemples de limiteurs de chaîne, on peut citer: les mercaptans tels que le n-butyl-, n-octyl-, n-lauryl-, t-dodécyl-mercaptan; des dérivés halogénés tels que: le tétrabromure de carbone...

Les latex cationiques de copolymères à base de diènes conjugués faisant l'objet de l'invention présentent un potentiel zéta pouvant varier depuis +80 mV à +20 mV lorsque le pH varie de 2 à 12 par exemple.

Lesdits latex cationiques peuvent être utilisés comme liants pour le couchage du papier, pour la préparation de voiles de non-tissés, pour le revêtement de substrats métalliques...

Les exemples suivants sont donnés à titre indicatif et ne peuvent être considérés comme une limite du domaine et de l'esprit de l'invention.

Exemple 1

A) 1ère étape

On charge à froid dans un autoclave de 5 litres

de capacité, muni d'un agitateur du type à ancre tournant à 180 t/mn

– 866 g d'eau désionisée

– 7,5 g de bromure de cétyldiméthylbenzylammonium,

– 15 g de chlorure de triméthylaminopropylméthacrylamide,

– 15 g de diméthylaminopropylméthacrylamide.

On porte l'autoclave à une température de 75 °C; on introduit à l'arrivée en température;

en une seule fois 7,5 g de chlorhydrate de 2-2'azobis(2-amidinopropane) chlorhydrate avec 50 g d'eau désionisée.

en continu pendant 5 heures sous débit constant:

– 750 g d'acrylate de butyle,

– 660 g de styrène,

– 60 g de diméthylaminopropylméthacrylamide puis 10 mn après l'arrivée en température, on introduit en continu pendant 7 heures sous débit constant:

– 15 g de 2,2'-azobis(2 amidinopropane) chlorhydrate

– 420 g d'eau désionisée.

La réaction est arrêtée par refroidissement après 11 heures de marche totale.

Le taux de transformation est de 99%.

Le produit obtenu est une dispersion présentant les caractéristiques suivantes:

| | |
|---|---|
| – pH | 7,8 |
| – quantité d'extrait sec | 43,1% en poids |
| – viscosité Brookfield (50 t/mn) | 240 mPa.s |
| – diamètre moyen des particules | 0,1 µ |

Le caractère cationique de la dispersion ainsi préparée est mis en évidence par mesure du potentiel zéta en fonction du pH.

La mesure est effectuée à l'aide d'un appareil de microélectrophorèse MARK II fabriqué par RANK BROTHERS et réalisée à une concentration de 0,05% en polymère sous une tension de mesure de 80 volts et à une température de 25 °C.

Les résultats de cette mesure sont les suivants:

| pH | potentiel zéta en mV |
|---|---|
| 4 | +66 |
| 6 | +52 |
| 8 | +30 |
| 10 | +22 |

B) 2ème étape

On charge à froids dans un autoclave de 5 litres de capacité muni d'un agitateur du type à hélice tournant à 150 t/mn,

– 900 g d'eau désionisée

– 173,85 g de la dispersion préparée à la 1ère étape.

On porte l'autoclave à une température de 75 °C.

On introduit à l'arrivée en température sous débit constant pendant 5 heures:

– 555 g de styrène

– 855 g de butadiène

– 9,75 g de tertiododécylmercaptan, puis en continu sous débit pendant 7 heures:

– 15 g de 2,2'azobis (2-amidinopropane) chlorhydrate et 375 g d'eau désionisée

– 15 g de nonylphénol oxyéthylené à 30 chainons d'oxyde d'éthylène.

La réaction est arrêtée par refroidissement après 12 h 30 mn de marche.

Le produit obtenu est une dispersion présentant les caractéristiques suivantes:

| | |
|---|---|
| – pH | 7,8 |
| – quantité d'extrait sec | 45% |
| – viscosité Brookfield (50 t/mn) | 112 mPa.s |
| – diamètre moyen des particules | 0,25 µ |

Les résultats des mesures de potentiel zéta sont les suivants

| pH | potentiel zéta en mV |
|---|---|
| 4 | + 42 |
| 6 | + 30 |
| 8 | + 18 |
| 10 | + 18 |

Exemple 2

A) 1ère étape

Etape identique à celle de l'exemple 1.

B) 2ème étape

On charge à froid:

– 900 g d'eau désionisée

– 173,85 g de dispersion préparée à la 1ère étape

On porte l'autoclave à une température de 75 °C.

On introduit à l'arrivée en température sous débit constant pendant 5 heures:

– 720 g de styrène

– 555 g de butadiène

– 225 g de méthacrylate de méthyle, puis en continu, sous débit constant pendant 7 heures:

– 15 g d'azobisisobutyronitrile

– 15 g de nonylphénol oxyéthyléné à 30 chainons d'oxyde d'éthylène

La réaction est arrêtée par refroidissement après 12 h 30 mn de marche.

Le produit obtenu est une dispersion présentant les caractéristiques suivantes:

| | |
|---|---|
| – pH | 6,2 |
| – quantité d'extrait sec | 42% |
| – viscosité Brookfield (50 t/mn) | 105 mPa.s |
| – diamètre moyen des particules | 0,25 µ |

Les résultats de mesure de potentiel zéta sont les suivants:

| pH | potentiel zéta en mV |
|---|---|
| 4 | + 46 |
| 6 | + 42 |
| 8 | + 38 |
| 10 | + 28 |

Exemple 3

On répète les opérations décrites à l'exemple 2 en remplaçant toutefois à la 2ème étape le méthacrylate de méthyle par le même poids d'acrylate de butyle.

La dispersion obtenue présente les caractéristiques suivantes:

| | |
|---|---|
| – pH | 7,8 |
| – quantité d'extrait sec | 45% |
| – viscosité Brookfield (50 t/mn) | 112 mPa.s |
| – diamètre moyen des particules | 0,25 μ |

Les résultats de mesure de potentiel zéta sont les suivants:

| pH | potentiel zéta en mV |
|---|---|
| 4 | + 49 |
| 6 | + 37 |
| 8 | + 30 |
| 10 | + 27 |

Exemple 4

On répète les opérations décrites à l'exemple 2 en remplaçant toutefois à la 2ème étape le méthacrylate de méthyle par le même poids d'acrylonitrile.

La dispersion obtenue présente les caractéristiques suivantes:

| | |
|---|---|
| – pH | 8,2 |
| – quantité d'extrait sec | 44,4% |
| – viscosité Brookfield (50 t/mn) | 240 mPa.s |
| – diamètre moyen des particules | 0,22 μ |

Les résultats de mesure de potentiel zéta sont les suivants:

| pH | potentiel zéta en mV |
|---|---|
| 4 | + 46 |
| 6 | + 40 |
| 8 | + 35 |
| 10 | + 27 |

Exemple 5

A) 1ère étape

On charge à froid dans un réacteur de 5 litres les ingrédients suivants:

– 1350 g d'eau désionisée

– 20 g de bromure de cétyldiméthylbenzylammonium

– 15 g de chlorure de triméthylaminopropylméthacrylamide

– 15 g de diméthylaminopropylméthacrylamide

– 159 g de styrène

– 129 g d'acrylate de butyle

On porte l'autoclave à une température de 75 °C et l'on introduit 15 g de chlorhydrate de 2,2' azobis(2-amidinopropane).

B) 2ème étape

Après 30 minutes, environ le taux de conversion est d'environ 90% et on introduit en continu pendant 5 heures sous débit constant:

– 901 g de styrène

– 731 g de butadiène

– 10 g de tertiododécylmercaptan.

On introduit ensuite en continu, pendant 5 heures, sous débit constant 10 g de chlorhydrate de 2,2'azobis(2-amidinopropane) dans 400 g d'eau désionisée.

On arrête la réaction par refroidissement après une durée totale de marche de 12 h 30 mn.

On obtient une dispersion cationique présentant les caractéristiques suivantes:

| | |
|---|---|
| – pH | 8,9 |
| – quantité d'extrait sec | 42,4% |
| – viscosité Brookfield (50 t/mn) | 190 mPa.s |
| – diamètre moyen des particules | 0,25 μ |

Les résultats de mesure de potentiel zéta sont les suivants:

| pH | potentiel zéta en mV |
|---|---|
| 4 | + 52 |
| 6 | + 46 |
| 8 | + 24 |
| 10 | + 20 |

Exemple 6

On répète les opérations décrites à l'exemple 5 en limitant toutefois le taux de conversion en fin de 1ère étape à 50% au lieu de 90% (10 mn de réaction environ).

La dispersion obtenue présente les caractéristiques suivantes:

| | |
|---|---|
| – pH | 8,6 |
| – quantité d'extrait sec | 41,8% |
| – viscosité Brookfield (50 t/mn) | 175 mPa.s |
| – diamètre moyen des particules | 0,22 μ |

Les résultats de mesure de potentiel zéta sont les suivants:

| pH | potentiel zéta en mV |
|---|---|
| 4 | + 55 |
| 6 | + 48 |
| 8 | + 26 |
| 10 | + 21 |

Exemple 7

A) 1ère étape

On charge à froid dans un autoclave de 5 litres de capacité et muni d'un agitateur du type hélice tournant à 150 t/mn:

– 1350 g d'eau

– 13 g de bromure de cétyldiméthylbenzylammonium

– 6,5 g d'acrylamide

– 26 g de chlorure de triméthylaminopropylméthacrylamide

On porte l'autoclave à une température de 80 °C; on introduit à l'arrivée en température:

– en une seule fois 7,5 g de chlorhydrate de 2,2'azobis(2-amidinopropane) et 50 g d'eau désionisée

– en continu sous débit constant pendant 5 heures:

1209 g de styrène

52 g de diméthylaminopropylméthacrylamide puis 10 minutes après l'arrivée en température, on

introduit en continu pendant 7 heures sous débit constant:

– 13 g de chlorhydrate de 2,2'azobis(2-amidinopropane)

– 480 g d'eau désionisée.

La réaction est arrêtée par refroidissement après 11 heures de marche totale.

Le taux de transformation est de 99%.

Le produit obtenu est une dispersion présentant les caractéristiques suivantes:

| | |
|---|---|
| – pH | 9 |
| – quantité d'extrait sec | 40,1% |
| – viscosité Brookfield (50 t/mn) | 60 mPa.s |
| – diamètre moyen des particules | 0,05 µ – 0,06 µ |

B) 2ème étape

On répète l'opération décrite à la 2ème étape de l'exemple 1, en prenant comme semence 187 g de la dispersion préparée ci-dessus.

On obtient une dispersion aqueuse présentant les caractéristiques suivantes:

| | |
|---|---|
| – pH | 7,6 |
| – quantité d'extrait sec | 44,8% |
| – viscosité Brookfield (50 t/mn) | 105 mPa.s |
| – diamètre moyen des particules | 0,15 µ |

Les résultats de mesure du potentiel zéta sont les suivants:

| pH | potentiel zéta en mV |
|---|---|
| 4 | + 36 |
| 6 | + 40 |
| 8 | + 28 |
| 10 | + 18 |

Exemple 8

A) 1ère étape

On répète l'opération décrite à la 1ère étape de l'exemple 1 en remplaçant les 15 g de chlorure de triméthylaminopropylméthacrylamide par 15 g de chlorure de 1-méthyl-2 vinylpyridinium.

On obtient une dispersion présentant les caractéristiques suivantes:

| | |
|---|---|
| – pH | 7,9 |
| – quantité d'extrait sec | 41,8% |
| – viscosité Brookfield (50 t/mn) | 215 mPa.s |
| – diamètre moyen des particules | 0,1 µ |

B) 2ème étape

On répète l'opération décrite à la 2ème étape de l'exemple 1 en prenant comme semence 179 g de la dispersion préparée à la 1ère étape ci-dessus.

On obtient une dispersion aqueuse présentant les caractéristiques suivantes:

| | |
|---|---|
| – pH | 7,8 |
| – quantité d'extrait sec | 44,2% |
| – viscosité Brookfield (50 t/mn) | 108 mPa.s |
| – diamètre moyen des particules | 0,25 µ |

Les résultats de mesure du potentiel zéta sont les suivants:

| pH | potentiel zéta en mV |
|---|---|
| 4 | + 55 |
| 6 | + 48 |
| 8 | + 32 |
| 10 | + 21 |

Exemple 9

A) 1ère étape

On charge à froid dans un autoclave de 5 litres de capacité et muni d'un agitateur du type hélice tournant à 150 t/mn:

– 866 g d'eau désionisée

– 7,5 g de bromure de cétyldiméthylbenzylammonium

– 15 g de chlorure de triméthylaminopropylméthacrylamide

On porte l'autoclave à une température de 75 °C; on introduit à l'arrivée en température:

– en une seule fois 7,5 g de chlorhydrate de 2,2'azobis(2-amidinopropane) et 50 g d'eau désionisée

– en continu sous débit constant pendant 5 heures:

750 g d'acrylate de butyle

660 g de styrène

On laisse ensuite la réaction se dérouler pendant 4 heures à 75 °C; le taux de transformation est alors de 90%.

On ajoute alors pendant 1 heure 75 g de diméthylaminopropylméthacrylamide.

La réaction est arrêtée par refroidissement après 9 heures de marche totale.

On obtient une dispersion aqueuse présentant les caractéristiques suivantes:

| | |
|---|---|
| – pH | 7,9 |
| – quantité d'extrait sec | 46,3% |
| – viscosité Brookfield (50 t/mn) | 453 mPa.s |
| – diamètre moyen des particules | 0,12 µ |

B) 2ème étape

On répète l'opération décrite à la 2ème étape de l'exemple 1, en prenant comme semence 162 g de la dispersion préparée ci-dessus.

On obtient une dispersion aqueuse présentant les caractéristiques suivantes:

| | |
|---|---|
| – pH | 8 |
| – quantité d'extrait sec | 44,1% |
| – jviscosité Brookfield (50 t/mn) | 258 mPa.s |
| – diamètre moyen des particules | 0,25 µ |

Les résultats de mesure du potentiel zéta sont les suivants:

| pH | potentiel zéta en mV |
|---|---|
| 4 | + 50 |
| 6 | + 41 |
| 8 | + 33 |
| 10 | + 25 |

Exemple 10

A) 1ère étape

On répète l'opération décrite à la 1ère étape de l'exemple 1.

B) 2ème étape

On répète l'opération décrite à la 2ème étape de l'exemple 1 en remplaçant les 855 g de butadiène par 855 g d'isoprène.

On obtient une dispersion aqueuse présentant les caractéristiques suivantes:

| | |
|---|---|
| –pH | 8,2 |
| –quantité d'extrait sec | 40,2% |
| –viscosité Brookfield (50 t/mn) | 103 mPa.s |
| –diamètre moyen des particules | 0,28 μ |

Les résultats de mesure du potentiel zéta sont les suivants:

| pH | potentiel zéta en mV |
|---|---|
| 4 | + 39 |
| 6 | + 28 |
| 8 | + 22 |
| 10 | + 19 |

Exemple 11

1ère étape

On répète l'opération décrite à la 1ère étape de l'exemple 5 en remplaçant les 159 g de styrène par 159 g d'acrylate de butyle (soit 288 g d'acrylate de butyle au total).

2ème étape

On répète l'opération décrite à la 2ème étape de l'exemple 5.

On obtient une dispersion aqueuse présentant les caractéristiques suivantes:

| | |
|---|---|
| –pH | 8,8 |
| –quantité d'extrait sec | 41,8% |
| –viscosité Brookfield (50 t/mn) | 198 mPa.s |
| –diamètre moyen des particules | 0,26 μ |

Les résultats de mesure du potentiel zéta sont les suivants:

| pH | potentiel zéta en mV |
|---|---|
| 4 | + 49 |
| 6 | + 42 |
| 8 | + 26 |
| 10 | + 19 |

Exemple 12

A) 1ère étape

On répète l'opération décrite à la 1ère étape de l'exemple 5, en remplaçant les 129 g d'acrylate de butyle par 129 g de styrène (soit 288 g de styrène au total).

B) 2ème étape

On répète l'opération décrite à la 2ème étape de l'exemple 5. On obtient une dispersion aqueuse présentant les caractéristiques suivantes:

| | |
|---|---|
| –pH | 8,7 |
| –quantité d'extrait sec | 42,5% |
| –viscosité Brookfield (50 t/mn) | 120 mPa.s |
| –diamètre moyen des particules | 0,23 μ |

Les résultats de mesure du potentiel zéta sont les suivants:

| pH | potentiel zéta en mV |
|---|---|
| 4 | + 54 |
| 6 | + 41 |
| 8 | + 30 |
| 10 | + 22 |

Exemple 13

A) 1ère étape

On répète l'opération décrite à la 1ère étape de l'exemple 5 en limitant le taux de conversion à 30% au lieu de 90%.

B) 2ème étape

On répète l'opération décrite à la 2ème étape de l'exemple 5. On obtient une dispersion aqueuse présentant les caractéristiques suivantes:

| | |
|---|---|
| –pH | 8,8 |
| –quantité d'extrait sec | 41,6% |
| –viscosité Brookfield (50 t/mn) | 129 mPa.s |
| –diamètre moyen des particules | 0,23 μ |

Les resultats de mesure du potentiel zéta sont les suivants:

| pH | potentiel zéta en mV |
|---|---|
| 4 | + 50 |
| 6 | + 42 |
| 8 | + 31 |
| 10 | + 23 |

**Revendications pour les Etats contractants BE, CH, DE, FR, GB, IT, LI, LU, NL, SE**

1. Latex cationiques de copolymères à base de diènes conjugués caractérisés en ce qu'ils sont obtenus en deux étapes:

– une première étape consistant à préparer une dispersion aqueuse cationique de particules en mettant en présence au moins un composé azoté tertiaire insaturé non-hydrolysable en milieu acide ou alcalin représenté par:

a) les N(ωdialkylaminoalkyl)amides d'acides carboxyliques insaturés de formule I

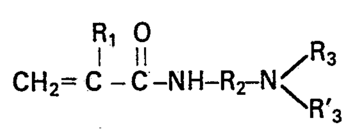

où:

$R_1$ représente un atome d'hydrogène ou un groupe alkyle en $C_1$–$C_4$

$R_2$ représente un groupe alkylène en $C_1$–$C_{12}$; $R_3$ et $R'_3$ représentent des groupes alkyles en $C_1$–$C_6$, phényles éventuellement substitués par un radical alkyle en $C_1$–$C_9$;

b) les aminoesters insaturés de formule II

$$CH_2=\overset{R'_1}{\overset{|}{C}}-\overset{O}{\overset{||}{C}}-O-R'_2-N\begin{matrix}R_3''\\R_3'''\end{matrix}$$

où:

$R'_1$ représente un groupe alkyle en $C_1-C_5$

$R'_2$ représente un groupe alkylène linéaire ou ramifié contenant au moins 2 atomes de carbone

$R_3''$ et $R_3'''$ sont identiques ou différents et représentent un groupe alkyle en $C_1-C_6$, éventuellement substitué par un radical hydroxy, un groupe phényle éventuellement substitué par un radical alkyle en $C_1-C_9$ le nombre total d'atomes de carbone contenus dans les radicaux $R'_2$, $R_3''$ et $R_3'''$ devant être supérieur à 8;

c) les composés azotés hétérocycliques renfermant un atome d'azote ou de carbone substitué par un groupe vinyle; avec le milieu réactionnel (A) d'une opération de polymérisation en émulsion aqueuse d'au moins un monomère non ionogène copolymérisable avec ledit composé azoté tertiaire insaturé non-hydrolysable, ledit milieu réactionnel (A) contenant des charges essentiellement cationiques apportées par au moins une substance génératrice de charges cationiques liables chimiquement aux polymères obtenus à partir des monomères présents et ce jusqu'à un taux de transformation d'au moins 30% des monomères non-ionogènes;

– une deuxième étape consistant à polymériser, au sein de la dispersion aqueuse cationique obtenue à la première étape, au moins un diène conjugué et eventuellement au moins un monomère non-ionogène en présence d'un amorceur non chargé ou générateur de charges cationiques.

2. Latex selon la revendication 1, caractérisés en ce que ledit composé azoté tertiaire insaturé non-hydrolysable est mis en présence du milieu réactionnel (A) à un stade quelconque de l'opération de polymérisation du ou des monomères non ionogènes copolymérisables avec le composé azoté tertiaire insaturé non-hydrolysable.

3. Latex selon la revendication 1 ou 2, caractérisés en ce que dans la formule I $R_1$ représente un groupe alkyle en $C_1-C_2$, $R_2$ représente un groupe alkylène en $C_1-C_8$, $R_3$ et $R'_3$ représentent des groupes alkyles en $C_1-C_4$.

4. Latex selon la revendication 3, caractérisés en ce que le composé azoté tertiaire insaturé non hydrolysable est du diméthylaminométhylacrylamide ou méthacrylamide ou du diméthylaminoéthylacrylamide ou méthacrylamide.

5. Latex selon la revendication 1 ou 2, caractérisés en ce que dans la formule II $R'_1$ est un groupe alkyle en $C_1-C_2$, $R'_2$ est un groupe alkylène linéaire ou ramifié en $C_2-C_{12}$, $R_3''$ et $R_3'''$ sont des groupes alkyles en $C_1-C_4$, le nombre total d'atomes de carbone contenus dans les radicaux $R'_2$, $R_3''$ et $R_3'''$ devant être supérieur ou égal à 10.

6. Latex selon la revendication 5, caractérisés en ce que le composé azoté tertiaire insaturé non hydrolysable est du diterbutylaminoéthylméthacrylate, du diterbutylaminopropylméthacrylate ou du dipentylaminoéthylméthacrylate.

7. Latex selon l'une quelconque des revendications précédentes, caractérisés en ce que le ou les monomères non ionogènes copolymérisables avec le composé azoté tertiaire insaturé non hydrolysable sont des composés vinylaromatiques, des esters vinyliques, des nitriles éthyléniques, des esters carboxyliques éthyléniques, des dialkylesters de diacides carboxyliques éthyléniques ou des amides éthyléniques et leurs dérivés N-substitués.

8. Latex selon l'une quelconque des revendications précédentes, caractérisés en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

9. Latex selon la revendication 8, caractérisés en ce que la substance génératrice de charges cationiques est un sel insaturé d'ammonium quaternaire de formule:

$$CH_2=\overset{R_4}{\overset{|}{C}}-\overset{O}{\overset{||}{C}}-A-R_5-\underset{\underset{R''_6}{|}}{\overset{\overset{R_6}{|}}{\overset{\oplus}{N}}}-R'_6,X^{\ominus}$$

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

$R_4$ représente un atome d'hydrogène ou un groupe méthyle

A représente un atome d'oxygène ou un groupe -NH-

$R_5$ représente un groupe alkylène linéaire ou ramifié contenant de 1 à 18 atomes de carbone.

$R_6$, $R'_6$, $R_6''$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

le nombre total d'atomes de carbone présent dans les groupes $R_5$, $R_6$, $R'_6$, et $R_6''$ est supérieur à 4 quand A représente de l'oxygène.

10. Latex selon la revendication 9, caractérisés en ce que le sel insaturé d'ammonium quaternaire est du chlorure de triméthylaminoéthylacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

11. Latex selon la revendication 8, caractérisés en ce que la substance génératrice de charge cationique est un sel insaturé de pyridinium, de quinolinium, d'imidazolium ou de benzimidazolium.

12. Latex selon l'une quelconque des revendications précédentes caractérisés en ce que la mise en œuvre de la substance génératrice de charges cationiques dans le milieu réactionnel (A) est préalable à celle du composé azoté tertiaire insaturé non hydrolysable ou concomittante de celle dudit composé azoté insaturé.

13. Latex selon l'une quelconque des revendications précédentes, caractérisés en ce que la substance génératrice de charges cationiques est présente dans le milieu réactionnel (A) au départ de l'opération de polymérisation par l'intermédiaire d'une «semence cationique».

14. Latex selon l'une quelconque des revendications précédentes caractérisés en ce qu'on met en œuvre à la première étape de polymérisation pour 100 parties en poids de monomère(s) non-ionogène(s):

de 1 à 20 parties en poids de substance génératrice de charges cationiques,

au moins 4 parties en poids au total de substance génératrice de charges cationiques et de composé azoté insaturé.

15. Latex selon la revendication 14, caractérisés en ce que l'on met en œuvre pour 100 parties en poids de monomère(s) non-ionogène(s):

de 2 à 10 parties en poids de substance génératrice de charges cationiques;

de 4 à 15 parties en poids au total de substance génératrice de charges cationiques et de composé azoté insaturé.

16. Latex selon l'une quelconque des revendications précédentes caractérisés en ce que l'opération de polymérisation est réalisée à une température comprise entre 60 et 90 °C, à un pH quelconque en présence d'un amorceur cationique ou non-ionique et éventuellement d'un agent émulsifiant cationique ou non-ionique.

17. Latex selon l'une quelconque des revendications précédentes, caractérisés en ce que le diène conjugué mis en œuvre à la 2ème étape de polymérisation est du butadiène, de l'isoprène, du chloroprène, du 1–3 pentadiène, du diméthylbutadiène, du cyclopentadiène.

18. Latex selon l'une quelconque des revendications précédentes, caractérisés en ce que la quantité de diène conjugué mise en œuvre correspond à 20 à 80% en poids par rapport au poids total de monomères utilisé pour réaliser l'ensemble du procédé.

19. Latex selon la revendication 18, caractérisés en ce que la quantité de diène conjugué correspond à 25 à 65% en poids par rapport au poids total de monomères utilisé pour réaliser l'ensemble du procédé.

20. Latex selon l'une quelconque des revendications précédentes caractérisés en ce que la quantité de monomères(s) non-ionogène(s) éventuellement présente à côté du diène conjugué pour réaliser la 2ème étape peut atteindre 80% en poids de la quantité totale de monomère non ionogène(s) mise en œuvre pour réaliser l'ensemble du procédé.

21. Latex selon l'une quelconque des revendications précédentes, caractérisés en ce que la 2ème étape de polymérisation est réalisée à une température comprise entre 60 et 90 °C à un pH quelconque éventuellement en présence d'un agent limiteur de chaîne.

22. Application des latex cationiques à base de diènes conjugués faisant l'objet de l'une quelconque des revendications précédentes, comme liants.

**Revendications pour l'Etat contractant AT**

1. Procédé de préparation de latex cationiques de copolymères à base de diènes conjugués caractérisés en ce qu'il comprend les deux étapes suivantes:

– une première étape consistant à préparer une dispersion aqueuse cationique de particules en mettant en présence au moins un composé azoté tertiaire insaturé non-hydrolysable en milieu acide ou alcalin représenté par:

a) les N(ωdialkylaminoalkyl)amides d'acides carboxyliques insaturés de formule I

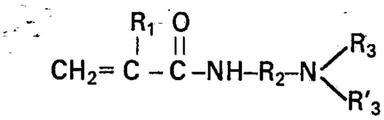

où:

$R_1$ représente un atome d'hydrogène ou un groupe alkyle en $C_1$–$C_4$

$R_2$ représente un groupe alkylène en $C_1$–$C_{12}$; $R_3$ et $R'_3$ représentent des groupes alkyles en $C_1$–$C_6$, phényles éventuellement substitués par un radical alkyle en $C_1$–$C_9$;

b) les aminoesters insaturés de formule II

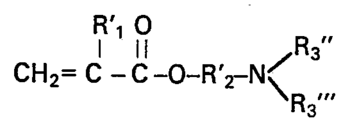

où:

$R'_1$ représente un groupe alkyle en $C_1$–$C_5$

$R'_2$ représente un groupe alkylène linéaire ou ramifié contenant au moins 2 atomes de carbone,

$R_3''$ et $R_3'''$ sont identiques ou différents et représentent un groupe alkyle en $C_1$–$C_6$, éventuellement substitué par un radical hydroxy, un groupe phényle éventuellement substitué par un radical alkyle en $C_1$–$C_9$ le nombre total d'atomes de carbone contenus dans les radicaux $R'_2$, $R_3''$ et $R_3'''$ devant être supérieur à 8;

c) les composés azotés hétérocycliques renfermant un atome d'azote ou de carbone substitué par un groupe vinyle; avec le milieu réactionnel (A) d'une opération de polymérisation en émulsion aqueuse d'au moins un monomère non ionogène copolymérisable avec ledit composé azoté tertiaire insaturé non-hydrolysable, ledit milieu réactionnel (A) contenant des charges essentiellement cationiques apportées par au moins une substance génératrice de charges cationiques liables chimiquement aux polymères obtenus à partir des monomères présents et ce jusqu'à un taux de transformation d'au moins 30% des monomères non-ionogènes;

– une deuxième étape consistant à polymériser, au sein de la dispersion aqueuse cationique obtenue à la première étape, au moins un diène conjugué et éventuellement au moins un monomère non-ionogène en présence d'un amorceur non chargé ou générateur de charges cationiques.

2. Procédé selon la revendication 1, caractérisé en ce que ledit composé azoté tertiaire insaturé non-hydrolysable est mis en présence du milieu réactionnel (A) à un stade quelconque de l'opération de polymérisation du ou des monomères non ionogènes copolymérisables avec le composé azoté tertiaire insaturé non-hydrolysable.

3. Procédé selon la revendication 1 ou 2, caractérisé en ce que dans la formule I $R_1$ représente un groupe alkyle en $C_1$–$C_2$, $R_2$ représente un groupe alkylène en $C_1$–$C_8$, $R_3$ et $R'_3$ représentent des groupes alkyles en $C_1$–$C_4$.

4. Procédé selon la revendication 3, caractérisé en ce que le composé azoté tertiaire insaturé non-hydrolysable est du diméthylaminométhylacrylamide ou méthacrylamide ou du diméthylaminoéthylacrylamide ou méthacrylamide.

5. Procédé selon la revendication 1 ou 2, caractérisé en ce que dans la formule II $R'_1$ est un groupe alkyle en $C_1$–$C_2$, $R'_2$ est un groupe alkylène linéaire ou ramifié en $C_2$–$C_{12}$, $R_3''$ et $R_3'''$ sont des groupes alklyes en $C_1$– $C_4$, le nombre total d'atomes de carbone contenus dans les radicaux $R'_2$, $R_3''$ et $R_3'''$ devant être supérieur ou égal à 10.

6. Procédé selon la revendication 5, caractérisé en ce que le composé azoté tertiaire insaturé non-hydrolysable est du diterbutylaminoéthylméthacrylate, du diterbutylaminopropylméthacrylate ou du dipentylaminoéthylméthacrylate.

7. Procédé selon l'une quelconque des revendications précédentes, caractérisé en ce que le ou les monomères non-ionogènes copolymérisables avec le composé azoté tertiaire insaturé non-hydrolysable sont des composés vinylaromatiques, des esters vinyliques, des nitriles éthyléniques, des esters carboxyliques éthyléniques, des dialkylesters de diacides carboxyliques éthyléniques ou des amides éthyléniques et leurs dérivés N-substitués.

8. Procédé selon l'une quelconque des revendications précédentes, caractérisé en ce que la substance génératrice de charges cationiques est constituée par un amorceur de polymérisation générateur de radicaux présentant une extrémité cationique et/ou un sel insaturé copolymérisable d'onium polycoordiné d'un élément des groupes VB et VIB.

9. Procédé selon la revendication 8, caractérisé en ce que la substance génératrice de charges cationiques est un sel insaturé d'ammonium quaternaire de formule:

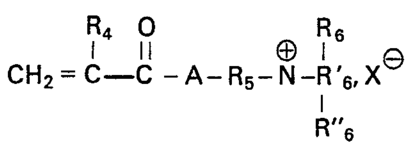

où

$X^-$ est choisi parmi les anions suivants: $Cl^-$, $Br^-$, $I^-$, $SO_4H^-$, $SO_4^{--}$, $CH_3SO_4^-$, $C_2H_5SO_4^-$, $CH_3COO^-$,

$R_4$ représente un atome d'hydrogène ou un groupe méthyle,

A représente un atome d'oxygène ou un groupe –NH–

$R_5$ représente un groupe alkylène linéaire ou ramifié contenant de 1 à 18 atomes de carbone.

$R_6$, $R'_6$, $R_6''$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

le nombre total d'atomes de carbone présent dans les groupes $R_5$, $R_6$, $R'_6$ et $R_6''$ est supérieur à 4 quand A représente de l'oxygène.

10. Procédé selon la revendication 9, caractérisé en ce que le sel insaturé d'ammonium quaternaire est du chlorure de triméthylaminoéthylacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

11. Procédé selon la revendication 8, caractérisé en ce que la substance génératrice de charge cationique est un sel insaturé de pyridinium, de quinolinium, d'imidazolium ou de benzimidazolium.

12. Procédé selon l'une quelconque des revendications précédentes, caractérisé en ce que la mise en œuvre de la substance génératrice de charges cationiques dans le milieu réactionnel (A) est préalable à celle du composé azoté tertiaire insaturé non-hydrolysable ou concomittante de celle dudit composé azoté insaturé.

13. Procédé selon l'une quelconque des revendications précédentes, caractérisé en ce que la substance génératrice de charges cationiques est présente dans le milieu réactionnel (A) au départ de l'opération de polymérisation par l'intermédiaire d'une «semence cationique».

14. Procédé selon l'une quelconque des revendications précédentes, caractérisé en ce qu'on met en œuvre à la première étape de polymérisation pour 100 parties en poids de monomère(s) non-ionogène(s):

de 1 à 20 parties en poids de substance génératrice de charges cationiques,

au moins 4 parties en poids au total de substance génératrice de charges cationiques et de composé azoté insaturé.

15. Procédé selon la revendication 14, caractérisé en ce que l'on met en œuvre pour 100 parties en poids de monomère(s) non-ionogène(s);

de 2 à 10 parties en poids de substance génératrice de charges cationiques;

de 4 à 15 parties en poids au total de substance génératrice de charges cationiques et de composé azoté insaturé.

16. Procédé selon l'une quelconque des revendications précédentes, caractérisé en ce que l'opération de polymérisation est réalisée à une température comprise entre 60 et 90 °C, à un pH quelconque en présence d'un amorceur cationique ou

non-ionique et éventuellement d'un agent émulsifiant cationique ou non-ionique.

17. Procédé selon l'une quelconque des revendications précédentes, caractérisé en ce que le diène conjugué mis en œuvre à la 2ème étape de polymérisation est du butadiène, de l'isoprène, du chloroprène, du 1–3 pentadiène, du diméthylbutadiène, du cyclopentadiène.

18. Procédé selon l'une quelconque des revendications précédentes, caractérisé en ce que la quantité de diène conjugué mise en œuvre correspond à 20 à 80% en poids par rapport au poids total de monomères utilisé pour réaliser l'ensemble du procédé.

19. Procédé selon la revendication 18, caractérisé en ce que la quantité de diène conjugué correspond à 25 à 65% en poids par rapport au poids total de monomères utilisé pour réaliser l'ensemble du procédé.

20. Procédé selon l'une quelconque des revendications précédentes, caractérisé en ce que la quantité de monomère(s) non-ionogène(s) éventuellement présente à côté du diène conjugué pour réaliser la 2ème étape peut atteindre 80% en poids de la quantité totale de monomère nonionogène (s) mise en œuvre pour réaliser l'ensemble du procédé.

21. Procédé selon l'une quelconque des revendications précédentes, caractérisé en ce que la 2ème étape der polymérisation est réalisée à une température comprise entre 60 et 90 °C à un pH quelconque éventuellement en présence d'un agent limiteur de chaîne.

22. Application des latex cationiques à base de diènes conjugués obtenus selon le procédé faisant l'objet de l'une quelconque des revendications précédentes, comme liants.

**Patentansprüche für die Vertragsstaaten BE, CH, DE, FR, GB, IT, LI, LU, NL, SE**

1. Kationische Latices von Copolymeren auf Grundlage konjugierter Diene, dadurch gekennzeichnet, dass sie erhalten werden in zwei Schritten:

– einem ersten Schritt bestehend in der Herstellung einer kationischen wässrigen Dispersion von Partikeln, durch Zugabe mindestens einer tertiären stickstoffhaltigen ungesättigten, in saurem oder alkalischem Milieu nicht hydrolysierbaren Verbindung, die entweder:

a) ein N(ω Dialkylaminoalkyl)amid einer ungesättigten Karbonsäure der Formel I

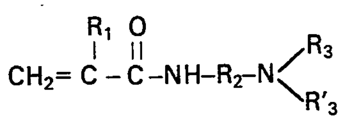

wobei:

– $R_1$ ein Wasserstoffatom oder eine Alkylgruppe mit 1 bis 4 C-Atomen ist

– $R_2$ eine Alkylengruppe mit 1 bis 12 C-Atomen ist; $R_3$ und $R'_3$ Alkylgruppen mit 1 bis 6 C-Atomen sind, oder Phenylgruppen, die substituiert sein können durch einen Alkylrest mit 1 bis 9 C-Atomen;

b) ein ungesättigter Aminoester mit der Formel II

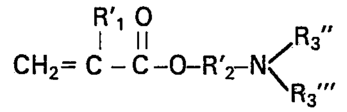

wobei:

– $R'_1$ eine Alkylgruppe mit 1 bis 5 C-Atomen ist

– $R'_2$ eine Alkylengruppe, die linear oder verzweigt ist, mit mindestens 2 Kohlenstoffatomen

– $R_3''$ und $R_3'''$ gleiche oder verschiedene Alkylgruppen mit 1 bis 6 C-Atomen sind, die substituiert sein können durch eine Hydroxygruppe oder Phenylgruppen sind, die substituiert sein können durch eine Alkylgruppe mit 1 bis 9 C-Atomen, wobei die Gesamtzahl der C-Atome in den Resten $R'_2$, $R_3''$ und $R_3'''$ grösser ist als 8;

c) oder eine heterozyklische stickstoffhaltige Verbindung ist, die entweder am Stickstoff oder am Kohlenstoff durch eine Vinylgruppe substituiert ist; zum Reaktionsmedium (A) eines Polymerisationsvorgangs mindestens eines nicht-ionogenen Monomeren in wässriger Emulsion, das mit genannter stickstoffhaltiger tertiärer ungesättigter, nicht hydrolisierbarer Verbindung copolymerisierbar ist, wobei das Reaktionsmedium (A) im wesentlichen kationische Ladungsträger enthält, die von mindestens einer Erzeugersubstanz für kationische Ladungsträger geliefert werden, wobei die kationischen Ladungsträger chemisch verknüpfbar sind mit den Polymeren, die aus den vorhandenen Monomeren erhalten werden, bis zu einem Umwandlungsgrad von mindestens 30% der nicht-ionogenen Monomeren;

– einem zweiten Schritt, der darin besteht, dass man in der im ersten Schritt erhaltenen kationischen wässrigen Dispersion mindestens ein konjugiertes Dien und gegebenenfalls mindestens ein nicht-ionogenes Monomer in Gegenwart eines nicht geladenen Starters oder Erzeugers für kationische Ladungen polymerisiert.

2. Latices nach Anspruch 1, dadurch gekennzeichnet, dass die genannte stickstoffhaltige tertiäre ungesättigte, nicht hydrolisierbare Verbindung dem Reaktionsmilieu (A) in irgendeinem Stadium des Verfahrens der Polymerisation des oder der nicht-ionogenen Monomeren, die mit der stickstoffhaltigen tertiären ungesättigten, nicht hydrolisierbaren Verbindung copolymerisierbar sind, zugegeben wird.

3. Latices nach Anspruch 1 oder 2, dadurch gekennzeichnet, dass in der Formel I $R_1$ eine Alkylgruppe darstellt mit $C_1$ bis $C_2$, $R_2$ eine Alkylengruppe darstellt mit $C_1$ bis $C_8$, $R_3$ und $R'_3$ Alkylgruppen mit $C_1$ bis $C_4$ darstellen.

4. Latices nach Anspruch 3, dadurch gekennzeichnet, dass die stickstoffhaltige tertiäre ungesättigte, nicht hydrolisierbare Verbindung Dimethylaminomethylacrylamid oder -methacrylamid oder Dimethylaminoethylacrylamid oder -methacrylamid ist.

5. Latices nach Anspruch 1 oder 2, dadurch gekennzeichnet, dass in der Formel II $R_1'$ eine Alkylgruppe mit $C_1$ bis $C_2$, $R_2'$ eine lineare oder verzweigte Alkylengruppe mit $C_2$ bis $C_{12}$, $R_3''$ und $R_3'''$ Alkylgruppen mit $C_1$ bis $C_4$ sind, wobei die Gesamtzahl der Kohlenstoffatome in den Resten $R_2'$, $R_3''$ und $R_3'''$ grösser oder gleich 10 ist.

6. Latices nach Anspruch 5, dadurch gekennzeichnet, dass die stickstoffhaltige tertiäre ungesättigte, nicht hydrolisierbare Verbindung Ditertiärbutylaminoethylmethacrylat, Ditertiärbutylaminopropylmethacrylat oder Dipentylaminoethylmethacrylat ist.

7. Latices nach einem der vorhergehenden Ansprüche, dadurch gekennzeichnet, dass das oder die nicht-ionogenen Monomeren, die mit der tertiären stickstoffhaltigen ungesättigten, nicht hydrolisierbaren Verbindung copolymerisierbar sind, vinylaromatische Verbindungen sind, vinylische Ester, ethylenische Nitrile, ethylenische Carboxylester, Dialkylester der ethylenischen Dicarbonsäuren oder ethylenische Amide und deren N-substituierte Derivate.

8. Latices nach einem der vorhergehenden Ansprüche, dadurch gekennzeichnet, dass die Erzeugersubstanz für kationische Ladungsträger aus einem Radikale erzeugenden Polymerisationsstarter besteht, der ein kationisches Ende aufweist, und/oder aus einem ungesättigten copolymerisierbaren Oniumsalz, das mit einem Element der Gruppen VB und VIB polykoordiniert ist.

9. Latices nach Anspruch 8, dadurch gekennzeichnet, dass die Erzeugersubstanz für kationische Ladungsträger ein ungesättigtes quaternäres Ammoniumsalz folgender Formel ist:

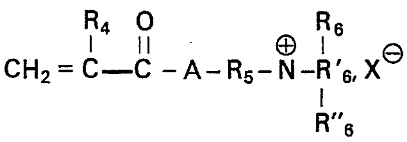

wobei:

– $X^-$ ausgewählt wird aus den folgenden Anionen: $Cl^-$, $Br^-$, $J^-$, $SO_4H^-$, $SO_4^{--}$, $CH_3SO_4^-$, $C_2H_5SO_4^-$, $CH_3COO^-$,

–$R_4$ ein Wasserstoffatom oder eine Methylgruppe darstellt,

– A ein Sauerstoffatom oder eine NH-Gruppe darstellt

– $R_5$ einen linearen oder verzweigten Alkylenrest darstellt mit 1 bis 18 Kohlenstoffatomen.

– $R_6$, $R_6'$, $R_6''$ gleich oder verschieden sind und eine Alkylgruppe mit 1 bis 4 Kohlenstoffatomen, evtl. substituiert durch eine Hydroxygruppe, oder eine Phenylgruppe evtl. substituiert durch einen Alkylrest mit 1 bis 9 Kohlenstoffatomen, darstellen.

– wobei die Gesamtzahl der in den Gruppen $R_5$, $R_6$, $R_6'$ und $R_6''$ anwesenden Kohlenstoffatome grösser ist als 4, wenn A Sauerstoff ist.

10. Latices nach Anspruch 9, dadurch gekennzeichnet, dass das ungesättigte quaternäre Ammoniumsalz das Chlorid des Trimethylaminoethylacrylamids, das Bromid des Trimethylaminopropylacrylamids oder -methacrylamids, das Methylsulfat des Trimethylaminobutylacrylamids oder -methacrylamids, oder das Chlorid des Trimethylaminopropylmethacrylats ist.

11. Latices nach Anspruch 8, dadurch gekennzeichnet, dass die Erzeugersubstanz für kationische Ladungsträger ein ungesättigtes Pyridinium, Chinolinium, Imidazolium, oder Benzimidazoliumsalz ist.

12. Latices nach einem der vorhergehenden Ansprüche, dadurch gekennzeichnet, dass die kationische Ladungsträger erzeugende Substanz dem Reaktionsmilieu (A) vor Zugabe der stickstoffhaltigen tertiären ungesättigten, nicht hydrolysierbaren Verbindung oder gleichzeitig mit genannter stickstoffhaltiger ungesättigter Verbindung zugegeben wird.

13. Latices nach einem der vorhergehenden Ansprüche, dadurch gekennzeichnet, dass die kationische Ladungsträger erzeugende Substanz zu Beginn des Polymerisationsverfahrens mittels einer «kationischen Saat» im Reaktionsmittel (A) anwesend ist.

14. Latices nach einem der vorhergehenden Ansprüche, dadurch gekennzeichnet, dass man im ersten Schritt der Polymerisation für 100 Gewichtsteile des nicht-ionogenen Monomeren (der nicht-ionogenen Monomeren):

– 1 bis 20 Gewichtsteile der kationische Ladungsträger erzeugenden Substanz,

– mindestens 4 Gewichtsteile an kationische Ladungsträger erzeugender Substanz und ungesättigter stickstoffhaltiger Verbindung zusammen einsetzt.

15. Latices nach Anspruch 14, dadurch gekennzeichnet, dass man für 100 Gewichtsteile an nicht-ionogenem Monomeren (nicht ionogenen Monomeren):

– 2 bis 10 Gewichtsteile an kationische Ladungsträger erzeugender Substanz;

– 4 bis 15 Gewichtsteile von kationische Ladungsträger erzeugender Substanz und ungesättigter stickstoffhaltiger Verbindung zusammen einsetzt.

16. Latices nach einem der vorhergehenden Ansprüche, dadurch gekennzeichnet, dass das Polymerisationsverfahren durchgeführt wird bei einer Temperatur zwischen 60 und 90 °C, bei irgendeinem pH in Gegenwart eines kationischen oder nicht-ionischen Starters und gegebenenfalls eines emulsierenden kationischen oder nichtionischen Agens.

17. Latices nach einem der vorhergehenden Ansprüche, dadurch gekennzeichnet, dass das konjugierte Dien, das im zweiten Schritt der Polymerisation eingesetzt wird, Butadien, Isopren, Chloropren, 1–3 Pentadien, Dimethylbutadien, Cyclopentadien ist.

18. Latices nach einem der vorhergehenden Ansprüche, dadurch gekennzeichnet, dass die eingesetzte Menge an konjugiertem Dien 20 bis 80 Gew.-% beträgt bezogen auf das Gesamtgewicht der für die Ausführung des gesamten Verfahrens verwendeten Monomeren.

19. Latices nach Anspruch 18, dadurch gekennzeichnet, dass die Menge des konjugierten Diens 25 bis 65 Gew.-% beträgt, bezogen auf das Gesamtgewicht der für die Ausführung des gesamten Verfahrens verwendeten Monomeren.

20. Latices nach einem der vorhergehenden Ansprüche, dadurch gekennzeichnet, dass die Menge des (der) nicht-ionogenen Monomeren, die gegebenenfalls neben dem konjugierten Dien für die Ausführung des zweiten Schritts anwesend ist, 80 Gew.-% des Gesamtgewichtes des (der) für die Ausführung des gesamten Verfahrens eingesetzten Monomeren erreichen kann.

21. Latices nach einem der vorhergehenden Ansprüche, dadurch gekennzeichnet, dass der zweite Schritt der Polymerisation bei einer Temperatur zwischen 60 und 90 °C, bei irgendeinem pH, gegebenenfalls in Gegenwart eines kettenbegrenzenden Agens durchgeführt wird.

22. Verwendung der kationischen Latices auf Grundlage konjugierter Diene, die Gegenstand eines der vorhergehenden Ansprüche sind, als Bindemittel.

**Patentansprüche für den Vertragsstaat AT**

1. Verfahren zur Herstellung kationischer Latices von Copolymeren auf Grundlage konjugierter Diene, dadurch gekennzeichnet, dass es die folgenden beiden Schritte umfasst:

– einen ersten Schritt bestehend in der Herstellung einer kationischen wässrigen Dispersion von Partikeln, durch Zugabe mindestens einer tertiären stickstoffhaltigen ungesättigten, in saurem oder alkalischem Milieu nicht hydrolysierbaren Verbindung, die entweder:

a) ein N(ω Dialkylaminoalkyl)amid einer ungesättigten Karbonsäure der Formel I

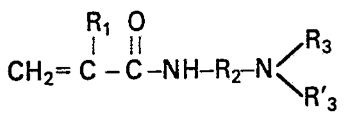

wobei:

– $R_1$ ein Wasserstoffatom oder eine Alkylgruppe mit 1 bis 4 C-Atomen ist

– $R_2$ eine Alkylengruppe mit 1 bis 12 C-Atomen ist; $R_3$ und $R'_3$ Alkylgruppen mit 1 bis 6 C-Atomen sind, oder Phenylgruppen, die substituiert sein können durch einen Alkylrest mit 1 bis 9 C-Atomen;

b) ein ungesättigter Aminoester mit der Formel II

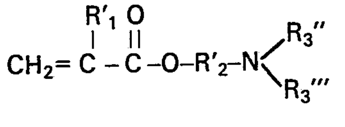

wobei:

– $R'_1$ eine Alkylgruppe mit 1 bis 5 C-Atomen ist

– $R'_2$ eine Alkylengruppe, die linear oder verzweigt ist, mit mindestens 2 Kohlenstoffatomen

– $R_3''$ und $R_3'''$ gleiche oder verschiedene Alkylgruppen mit 1 bis 6 C-Atomen sind, die substituiert sein können durch eine Hydroxygruppe oder Phenylgruppen sind, die substituiert sein können durch eine Alkylgruppe mit 1 bis 9 C-Atomen, wobei die Gesamtzahl der C-Atome in den Resten $R'_2$, $R_3''$ und $R_3'''$ grösser ist als 8;

c) oder eine heterozyklische stickstoffhaltige Verbindung ist, die entweder am Stickstoff oder am Kohlenstoff durch eine Vinylgruppe substituiert ist; zum Reaktionsmedium (A) eines Polymerisationsvorganges mindestens eines nicht-ionogenen Monomeren in wässriger Emulsion, das mit genannter stickstoffhaltiger tertiärer ungesättigter, nicht hydrolisierbarer Verbindung copolymerisierbar ist, wobei das Reaktionsmedium (A) im wesentlichen kationische Ladungsträger enthält, die von mindestens einer Erzeugersubstanz für kationische Ladungsträger geliefert werden, wobei die kationischen Ladungsträger chemisch verknüpfbar sind mit den Polymeren, die aus den vorhandenen Monomeren erhalten werden, bis zu einem Umwandlungsgrad von mindestens 30% der nicht-ionogenen Monomeren;

– einen zweiten Schritt der darin besteht, dass man in der im ersten Schritt erhaltenen kationischen wässrigen Dispersion mindestens ein konjugiertes Dien und gegebenenfalls mindestens ein nicht-ionogenes Monomer in Gegenwart eines nicht geladenen Starters oder Erzeugers für kationische Ladungen polymerisiert.

2. Verfahren nach Anspruch 1, dadurch gekennzeichnet, dass die genannte stickstoffhaltige tertiäre ungesättigte, nicht hydrolisierbare Verbindung dem Reaktionsmilieu (A) in irgendeinem Stadium des Verfahrens der Polymerisation des oder der nicht-ionogenen Monomeren, die mit der stickstoffhaltigen tertiären ungesättigten, nicht hydrolisierbaren Verbindung copolymerisierbar sind, zugegeben wird.

3. Verfahren nach Anspruch 1 oder 2, dadurch gekennzeichnet, dass in der Formel I $R_1$ eine Alkylgruppe darstellt mit $C_1$ bis $C_2$, $R_2$ eine Alkylengruppe darstellt mit $C_1$ bis $C_8$, $R_3$ und $R_3'$ Alkylgruppen mit $C_1$ bis $C_4$ darstellen.

4. Verfahren nach Anspruch 3, dadurch gekennzeichnet, dass die stickstoffhaltige tertiäre ungesättigte, nicht hydrolisierbare Verbindung Dimethylaminomethylacrylamid oder -methacrylamid oder Dimethylaminoethylacrylamid oder -methacrylamid ist.

5. Verfahren nach Anspruch 1 oder 2, dadurch gekennzeichnet, dass in der Formel II $R_1'$ eine Alkylgruppe mit $C_1$ bis $C_2$, $R_2'$ eine lineare oder verzweigte Alkylengruppe mit $C_2$ bis $C_{12}$, $R_3''$ und $R_3'''$ Alkylgruppen mit $C_1$ bis $C_4$ sind, wobei die Gesamtzahl der Kohlenstoffatome in den Resten $R_2'$, $R_3''$ und $R_3'''$ grösser oder gleich 10 ist.

6. Verfahren nach Anspruch 5, dadurch gekennzeichnet, dass die stickstoffhaltige tertiäre ungesättigte, nicht hydrolisierbare Verbindung Ditertiärbutylaminoethylmethacrylat, Ditertiärbutylaminopropylmethacrylat oder Dipentylaminoethylmethacrylat ist.

7. Verfahren nach einem der vorhergehenden Ansprüche, dadurch gekennzeichnet, dass das oder die nicht-ionogenen Monomeren, die mit der tertiären stickstoffhaltigen ungesättigten,

nicht hydrolisierbaren Verbindung copolymerisierbar sind, vinylaromatische Verbindungen sind, vinylische Ester, ethylenische Nitrile, ethylenische Carboxylester, Dialkylester der ethylenischen Dicarbonsäuren oder ethylenische Amide und deren N-substituierte Derivate.

8. Verfahren nach einem der vorhergehenden Ansprüche, dadurch gekennzeichnet, dass die Erzeugersubstanz für kationische Ladungsträger aus einem Radikale erzeugenden Polymerisationsstarter besteht, der ein kationisches Ende aufweist, und/oder aus einem ungesättigten copolymerisierbaren Oniumsalz, das mit einem Element der Gruppen VB und VIB polykoordiniert ist.

9. Verfahren nach Anspruch 8, dadurch gekennzeichnet, dass die Erzeugersubstanz für kationische Ladungsträger ein ungesättigtes quaternäres Ammoniumsalz folgender Formel ist:

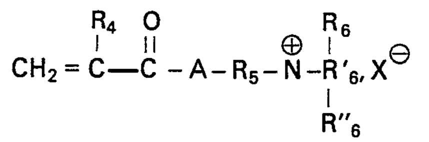

wobei:

– $X^-$ ausgewählt wird aus den folgenden Anionen: $Cl^-$, $Br^-$, $J^-$, $SO_4H^-$, $SO_4^{--}$, $CH_3SO_4^-$, $C_2H_5SO_4^-$, $CH_3COO^-$,

– $R_4$ ein Wasserstoffatom oder eine Methylgruppe darstellt,

– A ein Sauerstoffatom oder eine NH-Gruppe darstellt

– $R_5$ einen linearen oder verzweigten Alkylenrest darstellt mit 1 bis 18 Kohlenstoffatomen.

– $R_6$, $R_6'$, $R_6''$ gleich oder verschieden sind und eine Alkylgruppe mit 1 bis 4 Kohlenstoffatomen, evtl. substituiert durch eine Hydroxygruppe, oder eine Phenylgruppe evtl. substituiert durch einen Alkylrest mit 1 bis 9 Kohlenstoffatomen, darstellen.

– wobei die Gesamtzahl der in den Gruppen $R_5$, $R_6$, $R_6'$ und $R_6''$ anwesenden Kohlenstoffatome grösser ist als 4, wenn A Sauerstoff ist.

10. Verfahren nach Anspruch 9, dadurch gekennzeichnet, dass das ungesättigte quaternäre Ammoniumsalz das Chlorid des Trimethylaminoethylacrylamids, das Bromid des Trimethylaminopropylacrylamids oder -methacrylamids, das Methylsulfat des Trimethylaminobutylacrylamids oder -methacrylamids, oder das Chlorid des Trimethylaminopropylmethacrylats ist.

11. Verfahren nach Anspruch 8, dadurch gekennzeichnet, dass die Erzeugersubstanz für kationische Ladungsträger ein ungesättigtes Pyridinium, Chinolinium, Imidazolium, oder Benzimidazoliumsalz ist.

12. Verfahren nach einem der vorhergehenden Ansprüche, dadurch gekennzeichnet, dass die kationische Ladungsträger erzeugende Substanz dem Reaktionsmilieu (A) vor Zugabe der stickstoffhaltigen tertiären ungesättigten, nicht hydrolisierbaren Verbindung oder gleichzeitig mit genannter stickstoffhaltiger ungesättigter Verbindung zugegeben wird.

13. Verfahren nach einem der vorhergehenden Ansprüche, dadurch gekennzeichnet, dass die kationische Ladungsträger erzeugende Substanz zu Beginn des Polymerisationsverfahrens mittels einer «kationischen Saat» im Reaktionsmilieu (A) anwesend ist.

14. Verfahren nach einem der vorhergehenden Ansprüche, dadurch gekennzeichnet, dass man im ersten Schritt der Polymerisation für 100 Gewichtsteile des nicht-ionogenen Monomeren (der nicht-ionogenen Monomeren):

– 1 bis 20 Gewichtsteile der kationische Ladungsträger erzeugenden Substanz,

– mindestens 4 Gewichtsteile an kationische Ladungsträger erzeugender Substanz und ungesättigter stickstoffhaltiger Verbindung zusammen einsetzt.

15. Verfahren nach Anspruch 14, dadurch gekennzeichnet, dass man für 100 Gewichtsteile an nicht-ionogenem Monomeren (nicht-ionogenen Monomeren):

– 2 bis 10 Gewichtsteile an kationische Ladungsträger erzeugender Substanz;

– 4 bis 15 Gewichtsteile von kationische Ladungsträger erzeugender Substanz und ungesättigter stickstoffhaltiger Verbindung zusammen einsetzt.

16. Verfahren nach einem der vorhergehenden Ansprüche, dadurch gekennzeichnet, dass das Polymerisationsverfahren durchgeführt wird bei einer Temperatur zwischen 60 und 90 °C, bei irgendeinem pH in Gegenwart eines kationischen oder nicht-ionischen Starters und gegebenenfalls eines emulsierenden kationischen oder nicht-ionischen Agens.

17. Verfahren nach einem der vorhergehenden Ansprüche, dadurch gekennzeichnet, dass das konjugierte Dien, das im zweiten Schritt der Polymerisation eingesetzt wird, Butadien, Isopren, Chloropren, 1–3 Pentadien, Dimethylbutadien, Cyclopentadien ist.

18. Verfahren nach einem der vorhergehenden Ansprüche, dadurch gekennzeichnet, dass die eingesetzte Menge an konjugiertem Dien 20 bis 80 Gew.-% beträgt bezogen auf das Gesamtgewicht der für die Ausführung des gesamten Verfahrens verwendeten Monomeren.

19. Verfahren nach Anspruch 18, dadurch gekennzeichnet, dass die Menge des konjugierten Diens 25 bis 65 Gew.-% beträgt, bezogen auf das Gesamtgewicht der für die Ausführung des gesamten Verfahrens verwendeten Monomeren.

20. Verfahren nach einem der vorhergehenden Ansprüche, dadurch gekennzeichnet, dass die Menge des (der) nicht-ionogenen Monomeren, die gegebenenfalls neben dem konjugierten Dien für die Ausführung des zweiten Schrittes anwesend ist, 80 Gew.-% des Gesamtgewichtes des (der) die Ausführung des gesamten Verfahrens eingesetzten Monomeren erreichen kann.

21. Verfahren nach einem der vorhergehenden Ansprüche, dadurch gekennzeichnet, dass der zweite Schritt der Polymerisation bei einer Temperatur zwischen 60 und 90 °C, bei irgendeinem

pH, gegebenenfalls in Gegenwart eines kettenbegrenzenden Agens durchgeführt wird.

22. Verwendung der kationischen Latices auf Grundlage konjugierter Diene, die erhalten werden gemäss dem Verfahren, das Gegenstand eines der vorhergehenden Ansprüche ist, als Bindemittel.

**Claims for the Contracting States BE, CH, DE, FR, GB, IT, LI, LU, NL, SE**

1. Cationic latexes of copolymers based on conjugated dienes characterised in that they are produced in two steps:

– a first step comprising preparing a cationic aqueous dispersion of particles by bringing together at least one unsaturated tertiary nitrogen compound which is non-hydrolysable in an acid or alkaline medium represented by:

a) N-(ωdialkylaminoalkyl)amides of unsaturated carboxylic acids of formula I

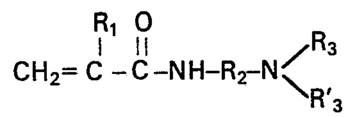

in which:

$R_1$ represents a hydrogen atom or a $C_1$–$C_4$ alkyl group,

$R_2$ represents a $C_1$–$C_{12}$ alkylene group; $R_3$ and $R'_3$ represent $C_1$–$C_6$ alkyl groups or phenyl groups which are optionally substituted by a $C_1$–$C_9$ alkyl radical;

b) unsaturated amino esters of formula II

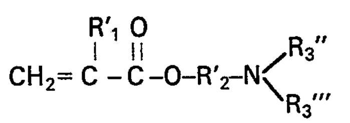

in which:

$R_1$ represents a $C_1$–$C_5$ alkyl group,

$R'_2$ represents a straight or branched alkylene group containing at least 2 carbon atoms,

$R_3''$ and $R_3'''$ are identical or different and represent a $C_1$–$C_6$ alkyl group, optionally substituted by a hydroxy radical, or a phenyl group optionally substituted by a $C_1$–$C_9$ alkyl radical, the total number of carbon atoms contained in the radicals $R'_2$, $R_3''$ and $R_3'''$ having to be higher than 8;

c) heterocyclic nitrogen compounds containing a nitrogen or carbon atom substituted by a vinyl group; and the reaction medium (A) of an operation for polymerisation in aqueous emulsion of at least one non-ionogenic monomer copolymerisable with said non-hydrolysable unsaturated tertiary nitrogen compound, said reaction medium (A) containing essentially cationic charges provided by at least one substance for generating cationic charges which can be chemically bonded to the polymers produced from the monomers present, up to a rate of transformation of at least 30% of the non-ionogenic monomers;

– a second step comprising polymerising, within the cationic aqueous dispersion produced in the first step, within the cationic diene and optionally at least one non-ionogenic monomer in the presence of a non-charged initiator or cationic charge generator.

2. Latexes according to claim 1, characterised in that said non-hydrolysable unsaturated tertiary nitrogen compound is brought together with the reaction medium (A) at any stage in the operation of polymerisation of the non-ionogenic monomer or monomers which are copolymerisable with the non-hydrolysable unsaturated tertiary nitrogen compound,

3. Latexes according to claim 1 or claim 2, characterised in that, in formula I, $R_1$ represents a $C_1$–$C_2$ alkyl radical, $R_2$ represents a $C_1$–$C_8$ alkylene radical and $R'_1$ represents $C_1$–$C_4$ alkyl groups.

4. Latexes according to claim 3, characterised in that the non-hydrolysable unsaturated tertiary nitrogen compound is dimethylaminomethylacrylamide or methacrylamide or dimethylaminoethylacrylamide or methacrylamide.

5. Latexes according to claim 1 or claim 2, characterised in that, in formula II, $R'_1$ is a $C_1$–$C_2$ alkyl group, $R'_2$ is a $C_2$–$C_{12}$ straight or branched alkylene group, $R_3''$ and $R_3'''$ are $C_1$–$C_4$ alkyl groups, the total number of carbon atoms contained in the radicals $R'_2$, $R_3''$ and $R_3'''$ having to be greater than or equal to 10.

6. Latexes according to claim 5, characterised in that the non-hydrolysable unsaturated tertiary nitrogen compound is diterbutylaminoethylmethacrylate, diterbutylaminopropylmethacrylate or dipentylaminoethylmethacrylate.

7. Latexes according to any one of the preceding claims, characterised in that the non-ionogenic monomer or monomers copolymerisable with the non-hydrolysable unsaturated tertiray nitrogen compound are vinyl aromatic compounds, vinyl esters, ethylenic nitriles, ethylenic carboxylic esters, dialkylesters of ethylenic carboxylic diacids or ethylenic amides and their N-substituted derivatives.

8. Latexes according to any one of the preceding claims, characterised in that the cationic charge-generating substance is formed by a radical-generator polymerisation initiator having a cationic terminal residue and/or a copolymerisable unsaturated salt of polyco-ordinated onium of an element in groups VB and VIB.

9. Latexes according to claim 8, characterised in that the cationic charge-generating substance is an unsaturated quaternary ammonium salt of the following formula:

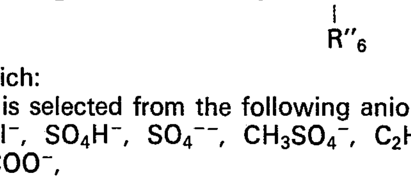

in which:

$X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,

$R_4$ represents a hydrogen atom or a methyl group,

A represents an oxygen atom or an –NH– group,

$R_5$ represents a straight or branched alkylene group containing from 1 to 18 carbon atoms,

$R_6$, $R'_6$ and $R_6''$ are similar or different and represent an alkyl group containing from 1 to 4 carbon atoms, optionally substituted by a hydroxy radical, or a phenyl group optionally substituted by an alkyl radical containing from 1 to 9 carbon atoms,

the total number of carbon atoms present in the groups $R_5$, $R_6$, $R'_6$ and $R_6''$ is higher than 4 when A represents oxygen.

10. Latexes according to claim 9, characterised in that the unsaturated quaternary ammoinium salt is trimethylaminoethylacrylamide chloride, trimethylaminopropylacrylamide or methacrylamide bromide, trimethylaminobutylacrylamide or methacrylamide methylsulphate or trimethylaminopropylmethacrylate chloride.

11. Latexes according to claim 8, characterised in that the cationic charge-generating substance is an unsaturated salt of pyridinium, quinolinium, imidazolium or benzimidazolium.

12. Latexes according to any one of the preceding claims, characterised in that use of the cationic charge-generating in the reaction medium (A) is prior to that of the non-hydrolysable unsaturated tertiary nitrogen compound or concurrent with that of said unsaturated nitrogen compound.

13. Latexes according to any one of the preceding claims characterised in that the cationic charge-generating substance is present in the reaction medium (A) at the beginning of the polymerisation operation by way of a «cationic seed».

14. Latexes according to any one of the preceding claims, characterised by using in the first polymerisation step, for 100 parts by weight of non-ionogenic monomer(s):

from 1 to 20 parts by weight of cationic charge-generating substance,

at least 4 parts by weight in total of cationic charge-generating substance and unsaturated nitrogen compound.

15. Latexes according to claim 14, characterised by using for 100 parts by weight of non-ionogenic monomer(s):

from 2 to 10 parts by weight of cationic charge-generating substance; and

from 4 to 15 parts by weight in total of cationic charge-generating substance and unsaturated nitrogen compound,

16. Latexes according to any one of the preceding claims, characterised in that polymerisation is carried out at a temperature of between 60 and 90 °C at any pH-value in the presence of a cationic or non-ionic initiator and optionally a cationic or non-ionic emulsifying agent.

17. Latexes according to any one of the preceding claims, characterised in that the conjugated diene used in the second polymerisation step is butadiene, isoprene, chloroprene, penta-1,3-diene, dimethylbutadiene or cyclopentadiene.

18. Latexes according to any one of the preceding claims, characterised in that the amount of conjugated diene used corresponds to 20 to 80% by weight with respect to the total weight of monomers used for carrying out the whole of the process.

19. Latexes according to claim 18, characterised in that the amount of conjugated diene corresponds to 25 to 65% by weight with respect to the total weight of monomers used for carrying out the whole of the process.

20. Latexes according to any one of the preceding claims, characterised in that the amount of non-ionogenic monomer(s) optionally present beside the conjugated diene for carrying out the second step can attain 80% by weight of the total amount of non-ionogenic monomer(s) used for carrying out the whole of the process.

21. Latexes according to any one of the preceding claims, characterised in that the second polymerisation step is carried out at a temperature of between 60 and 90 °C at any pH-value, optionally in the presence of a chain-limiting agent.

22. Use of the cationic latexes based on conjugated dienes according to any one of the preceding claims, as binding agents.

**Claims for the Contracting State AT**

1. Process for the preparation of cationic latexes of copolymers based on conjugated dienes characterised in that it comprises the following two steps:

– a first step comprising preparing a cationic aqueous dispersion of particles by bringing together at least one unsaturated tertiary nitrogen compound which is non-hydrolysable in an acid or alkaline medium represented by:

a) N-(ωdialkylaminoalkyl)amides of unsaturated carboxylic acids of formula I

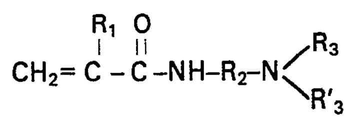

in which:

$R_1$ represents a hydrogen atom or a $C_1$–$C_4$ alkyl group,

$R_2$ represents a $C_1$–$C_{12}$ alkylene group; $R_3$ and $R'_3$ represent $C_1$–$C_6$ alkyl groups or phenyl groups which are optionally substituted by a $C_1$–$C_9$ alkyl radical;

b) unsaturated amino esters of formula II

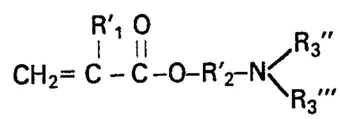

in which:

$R_1$ represents a $C_1$–$C_5$ alkyl group,

$R'_2$ represents a straight or branched alkylene group containing at least 2 carbon atoms,

$R_3''$ and $R_3'''$ are identical or different and represent a $C_1$–$C_6$ alkyl group, optionally substituted by a hydroxy radical, or a phenyl group optionally

substituted by a $C_1$–$C_9$ alkyl radical, the total number of carbon atoms contained in the radicals $R'_2$, $R_3''$ and $R_3'''$ having to be higher than 8;

c) heterocyclic nitrogen compounds containing a nitrogen or carbon atom substituted by a vinyl group; and the reaction medium (A) of an operation for polymerisation in aqueous emulsion of at least one non-ionogenic monomer copolymerisable with said non-hydrolysable unsaturated tertiary nitrogen compound, said reaction medium (A) containing essentially cationic charges provided by at least one substance for generating cationic charges which can be chemically bonded to the polymers produced from the monomers present, up to a rate of transformation of at least 30% of the non-ionogenic monomers;

– a second step comprising polymerising, within the cationic aqueous dispersion produced in the first step, at least one conjugated diene and optionally at least one non-ionogenic monomer in the presence of a non-charged initiator or cationic charge generator.

2. Process according to claim 1, characterised in that said non-hydrolysable unsaturated tertiary nitrogen compound is brought together with the reaction medium (A) at any stage in the operation of polymerisation of the non-ionogenic monomer or monomers which are copolymerisable with the non-hydrolysable unsaturated tertiary nitrogen compound.

3. Process according to claim 1 or claim 2, characterised in that, in formula I, $R_1$ represents a $C_1$–$C_2$ alkyl radical, $R_2$ represents a $C_1$–$C_8$ alkylene radical and $R'_1$ represent $C_1$–$C_4$ alkyl groups.

4. Process according to claim 3, characterised in that the non-hydrolysable unsaturated tertiary nitrogen compound is dimethylaminomethylacrylamide or methacrylamide or dimethylaminoethylacrylamide or methacrylamide.

5. Process according to claim 1 or claim 2, characterised in that, in formula II $R'_1$ is a $C_1$–$C_2$ alkyl group, $R'_2$ is a $C_2$–$C_{12}$ straight or branched alkylene group, $R_3''$ and $R_3'''$ are $C_1$–$C_4$ alkyl groups, the total number of carbon atoms contained in the radicals $R'_2$, $R_3''$ and $R_3'''$ having to be greater than or equal to 10.

6. Process according to claim 5, characterised in that the non-hydrolysable unsaturated tertiary nitrogen compound is diterbutylaminoethylmethacrylate, diterbutylaminopropylmethacrylate or dipentylaminoethylmethacrylate.

7. Process according to any one of the preceding claims, characterised in that the non-ionogenic monomer or monomers copolymerisable with the non-hydrolysable unsaturated tertiary nitrogen compound are vinyl aromatic compounds, vinyl esters, ethylenic nitriles, ethylenic carboxylic esters, dialkylesters of ethylenic carboxylic diacids or ethylenic amides and their N-substituted derivatives.

8. Process according to any one of the preceding claims, characterised in that the cationic charge-generating substance is formed by a radical-generator polymerisation initiator having a cationic terminal residue and/or a copolymerisable unsaturated salt of polyco-ordinated onium of an element in groups VB and VIB.

9. Process according to claim 8, characterised in that the cationic charge-generating substance is an unsaturated quaternary ammonium salt of the following formula:

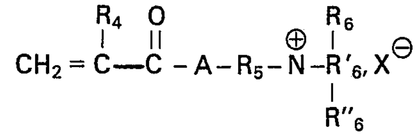

in which:

$X^-$ is selected from the following anions: $Cl^-$, $Br^-$, $I^-$, $SO_4H^-$, $SO_4^{--}$, $CH_3SO_4^-$, $C_2H_5SO_4^-$, $CH_3COO^-$,

$R_4$ represents a hydrogen atom or a methyl group,

A represents an oxygen atom or an –NH– group,

$R_5$ represents a straight or branched alkylene group containing from 1 to 18 carbon atoms,

$R_6$, $R'_6$ and $R_6''$ are similar or different and represent an alkyl group containing from 1 to 4 carbon atoms, optionally substituted by a hydroxy radical, or a phenyl group optionally substituted by an alkyl radical containing from 1 to 9 carbon atoms,

the total number of carbon atoms present in the groups $R_5$, $R_6$, $R'_6$ and $R_6''$ is higher than 4 when A represents oxygen.

10. Process according to claim 9, characterised in that the unsaturated quaternary ammonium salt is trimethylaminoethylacrylamide chloride, trimethylaminopropylacrylamide or methacrylamide bromide, trimethylaminobutylacrylamide or methacrylamide methylsulphate or trimethylaminopropylmethacrylate chloride.

11. Process according to claim 8, characterised in that the cationic charge-generating substance is an unsaturated salt of pyridinium, quinolinium, imidazolium or benzimidazolium.

12. Process according to any one of the preceding claims, characterised in that use of the cationic charge-generating substance in the reaction medium (A) is prior to that of the non-hydrolysable unsaturated tertiary nitrogen compound or concurrent with that of said unsaturated nitrogen compound.

13. Process according to any one of the preceding claims, characterised in that the cationic charge-generating substance is present in the reaction medium (A) at the beginning of the polymerisation operation by way of a «cationic seed».

14. Process according to any one of the preceding claims, characterised by using in the first polymerisation step, for 100 parts by weight of non-ionogenic monomer(s):

from 1 to 20 parts by weight of cationic charge-generating substance,

at least 4 parts by weight in total of cationic charge-generating substance and unsaturated nitrogen compound.

15. Process according to claim 14, characterised by using for 100 parts by weight of non-ionogenic monomer(s):

from 2 to 10 parts by weight of cationic charge-generating substance; and

from 4 to 15 parts by weight in total of cationic charge-generating substance and unsaturated nitrogen compound.

16. Process according to any one of the preceding claims, characterised in that polymerisation is carried out at a temperature of between 60 and 90 °C at any pH-value in the presence of a cationic or non-ionic initiator and optionally a cationic or non-ionic emulsifying agent.

17. Process according to any one of the preceding claims, characterised in that the conjugated diene used in the second polymerisation step is butadiene, isoprene, chloroprene, penta-1,3-diene, dimethylbutadiene or cyclopentadiene.

18. Process according to any one of the preceding claims, characterised in that the amount of conjugated diene used corresponds to 20 to 80% by weight with respect to the total weight of monomers used for carrying out the whole of the process.

19. Process according to claim 18, characterised in that the amount of conjugated diene corresponds to 25 to 65% by weight with respect to the total weight of monomers used for carrying out the whole of the process.

20. Process according to any one of the preceding claims, characterised in that the amount of non-ionogenic monomer(s) optionally present beside the conjugated diene for carrying out the second step can attain 80% by weight of the total amount of non-ionogenic monomer(s) used for carrying out the whole of the process.

21. Process according to any one of the preceding claims, characterised in that the second polymerisation step is carried out at a temperature of between 60 and 90 °C at any pH-value, optionally in the presence of a chain-limiting agent.

22. Use of the cationic latexes based on conjugated dienes produced by the process according to any one of the preceding claims, as binding agents.